# EUROPEAN PATENT APPLICATION

(11) **EP 2 374 831 A1**
(43) Date of publication of application: **12.10.2011**
(21) Application number: 10169540.1
(22) Date of filing: 14.07.2010
(51) Int. Cl.: C08G 77/04, C08G 73/06

(54) **Cyanate ester-based elastomer**

(30) Priority: 07.04.2010 US 755450
(71) Applicant: CORNERSTONE RESEARCH GROUP, INC., Dayton, OH 45440 (US)
(72) Inventor: Hreha, Richard Douglas, Beavercreek, OH 45431 (US); Collins, Brittany Nicole, Xenia, OH 45385 (US)
(74) Representative: De Anna, Pier Luigi

(57) **Abstract**

A cyanate ester elastomer is designed to be capable of withstanding a vacuum application such as space with low outgassing, have sufficient resistance to atomic oxygen, have high thermal stability, UV stability, low dielectric constant/loss, recover from elongation in excess of one hundred percent and elastomeric properties from -100 °C to 250 °C. When the cyanate ester elastomer is paired with other chemicals, it creates materials applicable as a seal, adhesive, or as an insulation material.

## Description

### BACKGROUND OF THE INVENTION

### Field of the Invention

The field of the presently disclosed invention relates to a multifunctional cyanate ester compound using mono-functional cyanate ester components and structural modifiers to tailor the thermal and mechanical properties of the compound. More specifically, the preferred embodiment is a 1,1-bis(2-cyanatophenyl) compound containing a siloxane-based bridging unit having a repeating unit between 1 and 14 as the primary multifunctional component of the elastomer.

### State of the Art

Elastomeric seals and adhesives are needed for a wide range of space applications. Materials which are well suited for terrestrial applications often cannot handle the extreme vacuum, temperature swings, and radiation present in space and low earth orbit. Silicone-based materials which offer good high temperature stability, atomic oxygen resistance, and low temperature flexibility typically exhibit high outgas products. The out-gassing typically decreases the materials performance. Additionally, the outgassed materials can condense elsewhere and interfere with sensitive optics and electronics and contaminate applications in a vacuum environment. Alternatively non-silicone based organic materials which exhibit low outgassing, normally do not have sufficient resistance to radiation and atomic oxygen (AO) to be useful in space. Therefore, no single class of materials adequately addresses the issues associated with space and vacuum durability. A material that has low outgassing and AO resistance is needed for vacuum environments such as space.

### SUMMARY OF THE INVENTION

The new cyanate ester elastomer can be used in extreme vacuum, temperature swings, and radiation present in space and low earth orbit because is possesses good AO resistance, low outgassing, high thermal stability, UV stability, low dielectric constant/loss, recovers from elongation in excess of one hundred percent and has elastomeric properties from -100 °C to 250 °C. In addition, when the cyanate ester elastomer is combined with a reinforcing material in a composite structure, it creates a material applicable as an insulative or structural material.

When used in a structure the cyanate ester elastomer is a material capable of acting as a deployable structure that, once deployed, is stable in the harsh conditions of space.

The current cyanate ester elastomer has demonstrated that the presence of two silicon atoms allows formulation of resins with functional silicone materials having molecular weights of up to 5000 while the presence of approximately six silicone atoms allowed formulation with functional silicones having a molecular weight of up to 25000. The synthesis of an additional silicone-linked cyanate ester allows for greater flexibility in selecting functional siloxane materials in elastomer formulation while also resulting in a broader ability to tune the thermal and mechanical properties of the cured elastomer.

Formulation is an ongoing iterative process, which, when carried out methodically, will yield materials that are optimized for the desired application. The use of dimethyl, diphenyl, and difluoro siloxane materials allows for the chemical, thermal and mechanical properties of the cyanate ester elastomer to be further tuned and optimized for desired applications. Specifically the use of diphenyl siloxanes may result in high transition temperature (*T_{g}*) elastomers for structural applications while difluoro siloxane material may result in elastomers which maintain their elastomeric properties at lower temperatures while also imparting enhanced chemical resistance. By optimizing the ratio of di-functional cyanate ester monomers, the amine functionalized siloxane, and monofunctional cyanate ester monomer an elastomeric material having the best compromise of cost and properties for the desired applications can be achieved. In general at least one multi-functional cyanate ester and a monofunctional monomer with one cyanate ester moiety per molecule is combined with an amine terminated oligomer.

Additionally, commercially available fillers or readily synthesizable fillers have demonstrated benefits of performance enhancement when incorporated into a polymer matrix. Fillers should be selected on their potential in enhancing the mechanical (e.g. toughness, tear strength), thermomechanical properties (e.g., *T_{g}*, degree of strain recovery, deformation cycling repeatability), and durability (e.g. atomic oxygen resistance, UV stability) of the cyanate ester elastomer. Some fillers which can be used for the cyanate ester elastomer include fumed silica, nanoclay, quartz and kaolin. Fumed silica and nanoclay result in enhanced tear resistance and atomic oxygen resistance.

### BRIEF DESCRIPTION OF THE DRAWINGS

Fig. 1 shows the Si₂ and Si₆ monomers that are ideal for use in making cyanate ester-based elastomers.

Fig. 2 shows the 4-substituted variations of the Si₂ and Si₆ monomers that could be used for making cyanate ester-based elastomers.

Fig. 3 shows the monomer developed which has approximately fourteen SiO repeating units.

### DETAILED DESCRIPTION OF EXEMPLARY EMBODIMENTS

The elastomer is based on a multifunctional cyanate ester component. Monofunctional cyanate ester components and structural modifiers are incorporated to tailor the thermal and mechanical properties.

In the preferred embodiment of the present invention a 1,1-bis(2-cyanatophenyl) compound containing a siloxane-based bridging unit having a repeating unit between 1 and 14 is the primary multifunctional component of the investigated elastomer. To make 1,3-bis-(3'-(2-cyanatophenyl)propyl)-polydimethylsiloxane, add to a pressure safe, sealable 500 ml round bottom flask containing an inert atmosphere add 150.0 grams of hydride terminated polydimethylsiloxane (molecular weight 1000-1100) and 98.0 grams of 2-allyl phenol, and 100 ml of toluene. After stirring the mixture for a period of twenty minutes, 1 ml of a platinum-divinyl tetramethyldisiloxane complex in vinyl silicone (3.0-3.5% platinum concentration) is added in 0.2 mL aliquots. The addition of each aliquot will cause an exothermic reaction to occur. Each aliquot is added after the reaction has once again reached room temperature. After the addition of the final aliquot, the reaction is heated in a 120 °C oil bath for a period of fifteen hours. The reaction mixture is allowed to cool and is filtered through a celite filter. The solvent is removed under reduced pressure. The intermediate product, component A, is isolated and purified by vacuum distillation.

To a sealed 1000 ml three neck round bottom flask is added component A (200 g), cyanogen bromide (35.35 g) and 750 mL of dichloromethane. The flask is cooled and maintained at -30°C. Triethylamine (33.77 g) is added slowly over a period of one hour. After the addition of the triethylamine is complete, the reaction is allowed to stir for ten minutes. The reaction is then allowed to reach and is maintained at -15°C for thirty minutes and 0 °C for thirty minutes after which it is allowed to reach room temperature. The reaction is washed five times in a separatory funnel with 0.5 N HCl (200 ml), followed by being washed five times with distilled water (200 ml). The reaction mixture is dried with magnesium sulfate and the product is isolated under reduced pressure.

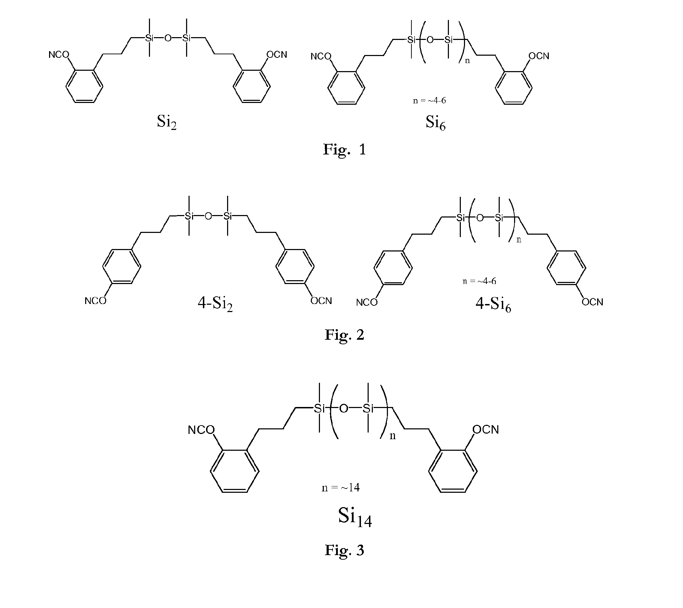

Based on design and performance criteria, the Si₂ and Si₆ monomers as shown in Fig. 1 are ideal development vehicles and useful as baselines. With formulation, these materials are capable of *T_{g}s* as low as -100 °C and are capable of greater than one hundred percent elongation, indicating that these monomers are suitable for many applications.

These materials should be optimized for each individual application. While optimizing the Si₂ and Si₆-based materials those who are skilled in the art will consider the 4-substituted variations of these monomers shown in Fig. 2. The 2-substituted Si₂ and Si₆ monomers exhibit significantly different cure kinetics relative to commercially available 4-substituted materials such as LECy and 4-CPCy. This is presumably due to steric effects caused by the 1,2-substitution in the Si₂ and Si₆ monomers.

The use of platinum-divinyltertamethyldisiloxane complex in place of platinum(IV) oxide (Adams catalyst) results in higher yield and simplified purification. This significantly reduces expense by simplifying the purification procedure. As purification is the most labor intensive aspect of the synthesis, this simplification dramatically reduces the labor time.

To expand the temperature capabilities of the base resin system, an additional monomer having approximately fourteen SiO repeating units was developed as shown in Fig. 3. Experience has shown it is easier to formulate from lower temperature to higher temperature. Using reactive silicone, low *T_{g}s* of approximately -100 °C with up to 25 °C can be obtained; however, these formulations are typically soft and have a tack that is undesirable for many applications such as o-rings. This longer chain monomer, Si₁₄ provides for a very low *T_{g}* material having higher durometer and lower tack. In addition, the longer length should provide enhanced compatibility with higher molecular weight reactive amine terminated silicones. This is potentially beneficial from the viewpoints of higher elongation, lower *T_{g}*, and reduced outgassing if residual un-reacted materials are present in the cured material.

To make the elastomer, following the directions above you need to make 1,3-bis-(3'-(2-cyanatophenyl)propyl)-polydimethylsiloxane. To obtain the cured samples, 0.05 g of zinc hexanoate in nonyl phenol (5% Zinc hexanoate by mass) was added to 10.0 g of 1,3-bis-(3'-(2-cyanatophenyl)propyl)-polydimethylsiloxane. To prepare the sample a mold was fabricated consisting of a 3" by 3" glass plate with a Viton ring encompassing the mold area. The reaction mixture formulated above was poured into the area encircled by the Viton. The mold was sealed by placing a 3" by 3" glass plate on top of the Viton ring. The two sheets of glass were held together by clamps around the edges. The Viton spacer also acted as a sealant in the mold. The samples were cured by heating in an oven at 120 °C for one hour, 150 °C for two hours, and 180 °C for eight hours.

The addition of fillers such as nanoclays and silicon dioxide resulted in significant enhancements in all properties, including elongation. This was interesting to note as typically the presence of fillers in elastomers results in decreases in elongation. The increase in elongation is due to the increased strength and modulus that results from the presence of the fillers. This increase allows the material to be clamped in a DMA. The Si₆ resin is of low durometer and is easily deformed at the clamps. This deformation resulted in tearing of samples during elongation testing set up, which led to the relatively low elongation that is seen in the pure material. All fillers examined did result in enhancements in tear strength. The addition of graphite fibers resulted in an approximately three hundred fifty percent increase in tear strength.

A formulation of Si₆ was made with liquid filler; the commercially available Bisphenol A based cyanate ester LECy. While LECy is a high-temperature, structural cyanate ester, the presence of a relatively small amount in Si₆ should not lead to large increases in *T*_{g} or decreases in elongation due to increased crosslink density. However, enhancements in all properties were observed at LECy concentrations below fifteen percent including increased tear strength and elongation.

The increased tear strength may be a function of the hard domains of cyanate ester present in the silicone matrix. These domains may act as fillers to prevent tear propagation. The presence of LECy at concentrations of ten, fifteen and twenty percent in Si₂ resulted in samples that did not tear. As the length of the silicone spacer in this material is more than double that of Si₆, it is believed that this material may be able to tolerate higher LECy concentrations. At concentrations equal to those in Si₆, the relative domain size of the hard cyanate ester unit may be much smaller relative to the domain size for the silicone spacers.

The effects of brominated bisphenol A diglycidyl ether (BrBADGE), which has a similar structure to LECy, were also examined. This epoxy material can react with cyanate ester groups to form a polyoxazolidone linkage. As this material does not participate in the cyclotrimerization that occurs with the cyanate ester moieties, it may incorporate into the network and not significantly affect the crosslink density of the material. The BrBADGE had relatively poor solubility in Si₆; consequently, the material was tested in a mixture of Si₂ and Si₆ and there was no decrease in elongation occurring at levels up to thirty percent.

Any compound having one cyanate ester moiety per molecule could be used as the monofunctional monomer. Suitable monomers include but are not limited to: 4-nonylphenyl cyanate ester, 4-phenylphenyl cyanate ester, 4-cumylphenol cyanate ester (4-CPCY), and phenyl cyanate ester.

Types of catalyst that may be used include, but are not limited to, acids, bases, nitrogen or phosphorus compounds, transition metal salts or complexes, such as metal salts of aliphatic and aromatic carboxylic acids, tertiary amines, combinations thereof and the like. Particularly suitable catalysts include, for example, cobalt octoate, cobalt naphthenate, cobalt acetylacetonate (Co(AcAc)₃), zinc octoate, zinc naphthenate, tin octoate, diazobicyclo-(2,2,2)-octane, triethylamine, combinations thereof and the like, often in combination with active hydrogen containing co-catalysts. The cocatalyst both serves as a solvent for the transition metal catalyst and aids in the ring closure of the triazine ring via hydrogen transfer. Suitable co-catalysts include alkyl phenols such as nonylphenol, bisphenols, alcohols, imidazoles or aromatic amines. Special organometallic initiators such as tricarbonylcyclo-pentadienyl manganese (CpMn(CO)₃) can also be used to allow the cyanate ester resins and cyanate ester SMP resins to be cured by irradiation of ultra violet (UV) light or electron beam at a lower curing temperature. These catalysts are employed in amounts of from about 0.0001 % to about 2.0%, and more preferably from about 0.01% to about 0.1% by weight based on total polycyanate resin.

Additionally, structural modifiers may be used to allow for the elastomer to be designed for a specific *T_{g}*, toughness, and flexibility depending on the desired specifications. In the preferred embodiment the structural modifier is diaminopropyl-poly(dimethylsiloxane) (DMS-A12) having a molecular weight between 700 and 1500 g/mol. Examples of structural modifiers include but are not limited to those listed below as well as their fluorinated derivatives: Poly(butadiene), hydroxyl terminated; Poly(butadiene), hydroxyl functionalized; Poly(isoprene), hydroxyl terminated; Poly(isoprene), hydroxyl functionalized;
Poly(chloroprene), hydroxyl terminated; Poly(chloroprene) hydroxyl functionalized; Poly(tetrahydrofuran); Poly(terathydrofuran) bis(3-aminopropyl) terminated; Poly(propylene glycol); Poly(ethylene glycol)-block-poly(propylene glycol)-block-poly(ethylene glycol); Poly(propylene glycol)bis(2-aminopropylether); Poly(1,4-butanediol)bis(4-aminobenzoate); Chitosan; Poly(2-methyl-1,3-propylen glutarate) hydroxyl terminated; Poly(lauryllactam)-block-poly(tetrahydrofuran); Poly(dimethylsiloxane) hydroxyl terminated; Ethylene glycol bis(propylene glycol-B-ethylene glycol) ether; Poly(acrylonitrile-co-butadiene), amine terminated; Poly(1,4-phenylene ether-ether sulfone) hydroxyl terminated; Poly(sulfone) hydroxyl terminated; Poly(phenyl sulfone) hydroxyl terminated; Poly(dimethylsiloxane), dihydroxy terminated; Poly(diphenylsiloxane), dihydroxy terminated; Poly(dimethylsiloxane-co-diphenylsiloxane), dihydroxy terminated; Poly(2-methyl-1,3-propylene glutarate), hydroxyl terminated; Poly(tetrafluoroethylene oxide-co-difluoromethylene oxide) α,ω-diol; Poly(vinyl chloride-co-vinyl acetate-co-vinyl alcohol); 1,3-propanediol; 1,2-propanediol; 2-methyl-1,3-propanediol; neopentyl glycol; 2-ethyl-2-methyl-1,3-propanediol; 2,2-diethyl-1,3-propanediol; 2-methyl-2-propyl-1,3-propanediol; 2-butyl-2-ethyl-1,3-propanediol; 1,4-butanediol; 1,3-butanediol; 1,2-butanediol; 2,3-butanediol; 3,3-dimethyl-1,2-butanediol; 1,5-pentanediol; 1,4-pentanediol; 1,2-pentanediol; 2,4-pentanediol; 2-methyl-2,4-pentanediol; 2-methyl-2,4-pentanediol; 2,4-dimethyl-2,4-pentanediol; 2,2,4-trimethyl-1,3-pentanediol; 1,6-hexanediol; 1,5-hexanediol;1,3-hexanediol; 2,5-hexanediol; 2-ethyl-1,3-hexanediol; 2,5-dimethyl-2,5-hexanediol; 1,7-hexanediol; 1,8-octanediol; 1,2-octanediol; 1,9-nonanediol; 1,10-decanediol; 1,2-decanediol; 1,12-dodecanediol; 1,2-dodecanediol; 1,14-tetradecanediol; 1,2-tetradecanediol; 1,16-hexadecanediol; 1,2-hexadecanediol; 1,4-cyclehexanediol; 4,4'-isopropylidenedicyclohexanol; Cis-1,5-cyclooctanediol; Cis-exo-2,3-norbornanediol; 1,5-decalindiol; 3-fluoro-1,2-propanediol; 2,2,3,3,4,4-hexafluoro-1,5-pentanediol; 2,2,3,3,4,4,5,5-octaffuoro-1,6-hexanediol; 2,2,3,3,4,4,5,5,6,6,7,7,8,8,9,9-hexadecafluoro-1,10-decanedi ol; 1,2,6-trihydroxyhexane; 1,2-diaminopropane; 1,3-diaminopropane; 1,4-diaminobutane; 1,5-diaminopentane; 2,2-dimethyl-1,3-propanediamine; hexamethylenediamine; dytek A amine; 1,7-diaminoheptane; 1,8-diaminooctane; 1,9-diaminononane; 1,10-diaminodecane; 1,12-diaminododecane; N-methylethylenediamine; N-ethylethylenediamine; N-propylethylethylenediamine; N-isopropylethylenediamine; N,N'-dimethylethylenediamine; N,N'-diethylethylenediamine; N,N'-diisopropylethylenediamine; N-propyl-1,3-propanediamine; N-isopropyl-1,3-propanediamine; N,N'diisopropyl-1,3-propanediamine; 2-butyl-2-ethyl-1,5-pentanediamine; N,N'-dimethyl-1,6-hexanediamine; 3,3-diamino-N-methyldipropylamine; N-(3-aminopropyl)-1,3-propanediamine; 3,3'-iminobis(N,N'-dimethylpropylamine); 1,8-diamino-P-menthane; 5-amino-1,3,3-trimethylcyclohexanemethylamine; 2,2-(ethylenedioxy)-bis(ethylamine); 4,9-dioxa-1,12-dodcanediamine; 4,7,10-trioxa-1,13-tridecanediamine; 3-amino-1-propanol; 4-amino-1-butanol; 2-amino-1-butanol; 5-amino-1-pentanol; 6-amino-1-hexanol; 2-amino-2-methyl-1-propanol; 2-(2-aminoethoxy)ethanol; 2-(methylamino)ethanol; DL-2-amino-1-hexanol; 2-(ethylamino)ethanol; 2-(propylamino)ethanol; 2-(tert-Butylamino)ethanol; Diethanolamine; Diisopropanolamine; N,N'-bis(2-hydroxyethyl)-ethylenediamine; 2-(butylamino)ethanethiol; 3-pyrrolidinol; 3-piperidinemethanol; 3-piperidineethanol; 3-piperidinepropanol; 3-piperidinebutanol; 4-hydroxypiperidine; 4,4'-trimethylenebis(1-piperidineethanol); 4,4'-trimethylenedipiperidine; 4-(aminomethyl)piperidine; 3-(4-aminobutyl)piperidine; N, N'-bis(2,2,6,6-tetramethyl-4-piperidinyl)-1,6-hexanediamin e; 1,4,10-trioxa-7,13-diazacyclopentadecane; 1,4-butanedithiol; 2,3-butanedithiol; 1,5-pentanedithiol; 1,6-hexanedithiol; 1,8-octanedithiol; 1,9-nonanedithiol; 3-mercapto-1-propanol; 3-mercapto-2-butanol; 2-mercaptoethyl ether; 2,2'-thiodiethanol; 2-hydroxyethyl disulfide; 3,6-dithia-1,8-octanediol; 3,3'-thiodipropanol; 3-methylthio-1,2-propanediol; 2-mercaptoethyl sulfide; di(ethylene glycol); di(propylene glycol); tri(ethylene glycol); tri(propylene glycol); tetra(ethylene glycol); penta(ethylene glycol); hexa(ethylene glycol); 1,1'bi-2-napthol; 1,5-dihydroxynapthalene; 1,6-dihydroxynapthalene; 2,6-dihydroxynaphthalene; 2,7-dihydroxynapthalene; 4,4'-(9-fluorenylidene)-diphenol; anthrarobin; bis(2-hydroxyphenyl)methane; hydroquinone; methyoxyhydroquinone; diethylstilbestrol; bis(4-hydroxyphenyl)methane; bisphenol A; 4,4-(hexafluoroisopropylidene)diphenol; 2,2-bis(4-hydroxy-3-methylphenyl)propane; Meso-hexestrol; Nordihydroguaiaretic acid; Hydrobenzoin; Benzopinacole; 2,2'-(1,2-phenylenedioxy)diethanol; 2,2-dimethyl-1-phenyl-1,3-propanediol; 3-hydroxybenzyl alcohol; 1,3-benzendimethanol; Alpha, alpha, alpha', alpha'-tetramethyl-1,3-benzenedimethanol; Alpha, alpha, alpha', alpha'-tetrakis(trifluoromethyl)-1,3-benzenedimethanol; 3-aminobenzyl alcohol; 1,4-benzenedimethanol; 3-hydroxy-4-methoxybenzyl alcohol; 2,2'-biphenyldimethanol; 2-benzyloxy-1,3-propanediol; 2-(2-hydroxyethoxy)phenol; 4-hydroxyphenethyl alcohol; 3-(4-methoxyphenyl)-1-propanol; hydroquinone bis(2-hydroxyethyl)ether; homovanillyl alcohol; 1,4-benzenedimethanethiol; 1,2-benzenedithiol; 1,2-benzenedimethanethiol; 1,3-benzenedithiol; 1,3-benzenedimethanethiol; 4-chloro-1,3-benzenedithiol; 2,4,6-trimethyl-1,3-benzenedimethanethiol; 3-tert-butyl-4-hydroxy-5-methylphenyl sulfide; 3-tert-butyl-4-hydroxy-2-methylphenyl sulfide; 2,2'-thiobis(4-tert-octylphenol); 4-(methylthio)benzyl alcohol; 4,4'-thiodiphenol; 4,4'thiobisbenzenethiol; 2-aminophenol; 2-aminobenzyl alcohol; 2-aminophenethyl alcohol; 2-aminothiophenol; 2-aminophenyl disulfide; 3-aminophenol; 3-aminobenzyl alcohol; 3-aminophenethyl alcohol; 3-aminothiophenol; 3-(1-hydroxyethyl)aniline; 4,4'-ethylenedianiline; 3,3'-methylenedianiline; 4,4'methylenedianiline; 4,4'-oxydianiline; 4",4"'-(hexafluoroisopropylidene)-bis(4-phenoxyaniline); 3-aminophenol; 4-aminothiophenol; 4,4'thiodianiline; 4-aminophenethyl alcohol; o-tolidine; 4,4'-ethylenedi-m-toluidine; 5,5'-(hexafluoroisopropylidene)-di-o-toluidine; 5-amino-2-methoxyphenol; 2-amino-3-methylbenzyl alcohol; 4,4'-methylenebis(2,6-dimethylaniline); 4,4'-methylenebis(2,6-diethylaniline); 4,4'-methylenebis(2,6-diisopropylaniline); 3,3',5,5'-tetramethylbenzidine; 1,2-phenylenediamine; N-methyl-1,2-phenylenediamine; 2,3-diaminotoluene; 1,3-phenylenediamine; N,N'-diphenyl-1,4-phenylenediamine; N,N'-diphenylbenzidine; N-phenyl-1,4-phenyldiamine; N-methyl-4,4'-methylenediailine; 3,3'(hexafluoroisopropylidene)dianiline; 4,4'-(hexafluoroisopropyledene)dianiline; 3,3'-dimethoxybenzidine; 3-hydroxydiphenylamine; N-(4-hydroxyphenyl)-2-naphthylamine; 3,3'-dimethylnaphthidine; 1,5-diaminonaphthalene; 2,7-diaminofluorene; 3,7-diamino-2-methoxyfluorene; 2-amino-9-hydroxyfluorene; 2-aminobenzylamine; 4-aminobenzylamine; Tyramine; 2',6'-dihydroxyacetophenone; 2',4'-dihydroxyacetophenone; 2',5'-dihydroxyacetophenone; 2',4'-dihydroxypropiophenone; 2',5'-dihydroxypropiophenone; 4,4'-dihydroxybenxophenone; 4,4'-diaminobenzophenone.

## Claims

1. A cyanate ester elastomer comprising:
at least one multi-functional cyanate ester and a monofunctional monomer with one cyanate ester moiety per molecule combined with an amine terminated oligomer creating a cyanate ester elastomer.

2. The cyanate ester elastomer of claim 1 wherein said cyanate ester elastomer has a transition temperature between -100°C and 25°C.

3. The cyanate ester elastomer of claim 1 wherein said multi-functional cyanate ester is a co-polymer consisting of at least one multi-functional cyanate ester and at least one mono-functional cyanate ester.

4. The cyanate ester elastomer of claim 1 wherein said cyanate ester elastomer further comprises a structural modifier.

5. The cyanate ester elastomer of claim 4 wherein said structural modifier is a monofunctional or multifunctional cyanate ester.

6. The cyanate ester elastomer of claim 4 wherein said structural modifier is a component of the monofunctional monomer wherein said component of the monofunctional monomer is a monofunctional or multifunctional cyanate ester.

7. The cyanate ester elastomer of claim 1 wherein said cyanate ester further comprises at least one amine terminated silicone.
